# FASCICULE DE BREVET EUROPEEN

(11) **EP 0 773 362 B1**
(45) Date de publication et mention de la délivrance du brevet: **04.04.2001**
(21) Numéro de dépôt: 96420327.7
(22) Date de dépôt: 07.11.1996
(51) Int. Cl.: F02M 37/10, B60K 15/077

(54) **Dispositif pour la suspension d'une pompe et/ou d'une crépine appartenant à un ensemble de pompage**
Vorrichtung für die Aufhängung einer Pumpe und/oder Sieb zur Pumpeneinheit gehörend
Device for the suspension of a pump and/or sieve belonging to a pump assembly

(30) Priorité: 08.11.1995 FR 9513436
(43) Date de publication de la demande: 14.05.1997
(73) Titulaire: Bitron France, 58000 Nevers (FR)
(72) Inventeur: Martin, Pascal, 58000 Nevers (FR)
(74) Mandataire: Myon, Gérard Jean-Pierre

(56) Documents cités:
- DE-A- 3 704 191
- DE-A- 4 336 574
- FR-A- 2 391 935

## Description

La présente invention a trait un dispositif permettant la suspension d'une pompe et/ou d'une crépine appartenant à un ensemble de pompage de carburant pour des véhicules automobiles et à un ensemble de suspension comprenant plusieurs dispositifs de ce genre.

On connaît des dispositifs de pompage qui comprennent généralement une platine destinée à être fixée sur une paroi du réservoir, une monture plaquée à partir de la platine vers le fond du réservoir et éventuellement un bac de tranquillisation intercalé entre la monture et le fond du réservoir. Dans certains cas, le bac de tranquillisation peut être éventuellement fixé au fond du réservoir sans liaison mécanique avec la platine. Une pompe immergée munie d'une crépine puisant le carburant au fond du réservoir ou du bac de tranquillisation est fixée à l'intérieur de l'ensemble de pompage (voir DE-A-3 704 191, ou DE-A-4 336 574, ou FR-A-2 391 935).

Cet ensemble de pompage comporte un système d'amortissement des vibrations générées par la pompe. Ce système est généralement constitué de deux pièces en caoutchouc disposées à chaque extrémité de la pompe. Les pièces en caoutchouc sont logées dans la monture avec un dispositif de maintien.

On constate que les deux pièces en caoutchouc disposées à chaque extrémité de la pompe ne permettent pas d'amortir complètement les vibrations de ladite pompe qui sont essentiellement constituées d'un rotulage autour du centre de gravité de la partie tournante et d'efforts radiaux. En effet, le dispositif constitué de deux pièces de caoutchouc ne permet pas d'amortir à la source les vibrations, ce qui entraîne la propagation d'un bruit à l'intérieur de l'habitacle du véhicule.

C'est à ces inconvénients qu'entend plus particulièrement remédier la présente invention.

Le dispositif de suspension suivant la présente invention consiste à simplifier la fixation de la pompe sur la crépine dans le but de réduire d'une part les coûts de fabrication et d'autre part d'améliorer les performances d'amortissement des vibrations.

Le dispositif de suspension comprend une jupe venant se positionner sur l'élément fixe de l'ensemble de pompage, une bague centrale disposée co-axialement à la jupe de manière à supporter la pompe et/ou la crépine et des moyens flexibles constitués de branches reliant la jupe à la bague centrale, chaque branche étant disposée dans un plan passant par l'axe de symétrie de la pompe et/ou de la crépine de manière que la déformation élastique de chaque branche soit principalement contenue dans le plan passant par l'axe de symétrie de la pompe et/ou de la crépine.

En outre, chaque branche constituant les moyens flexibles comporte au moins un segment sensiblement parallèle à l'axe de la pompe et/ou de la crépine et au moins un segment sensiblement perpendiculaire à l'axe de la pompe et/ou de la crépine

Le dessin annexé, donné à titre d'exemple, permettra de mieux comprendre l'invention, les caractéristiques qu'elle présente et les avantages qu'elle est susceptible de procurer :
Fig. 1 est une vue en perspective éclatée illustrant le dispositif de suspension suivant la présente invention.
Fig. 2 est une coupe verticale montrant un ensemble de pompage muni du dispositif de suspension suivant la présente invention.
Fig. 3 est une vue en perspective représentant une variante du dispositif de suspension suivant la présente invention.

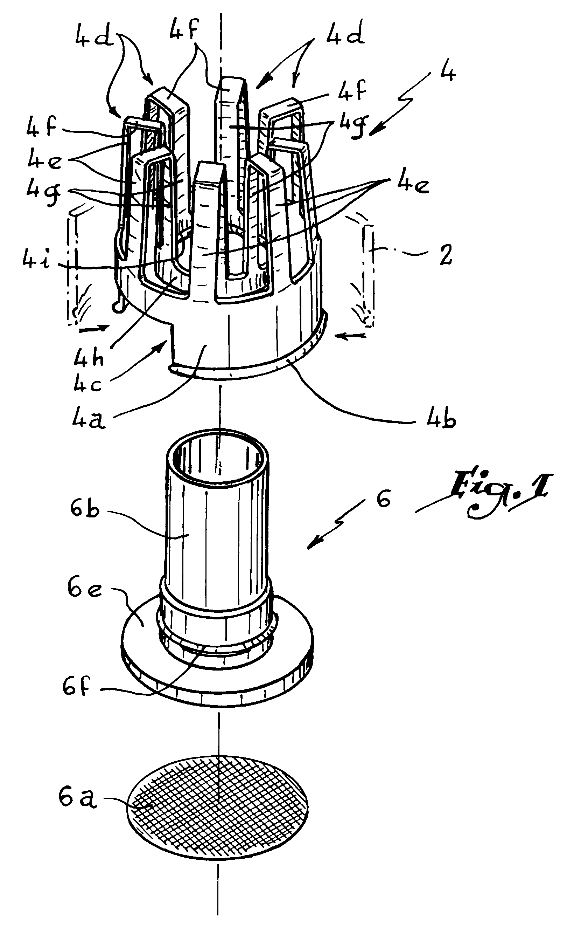

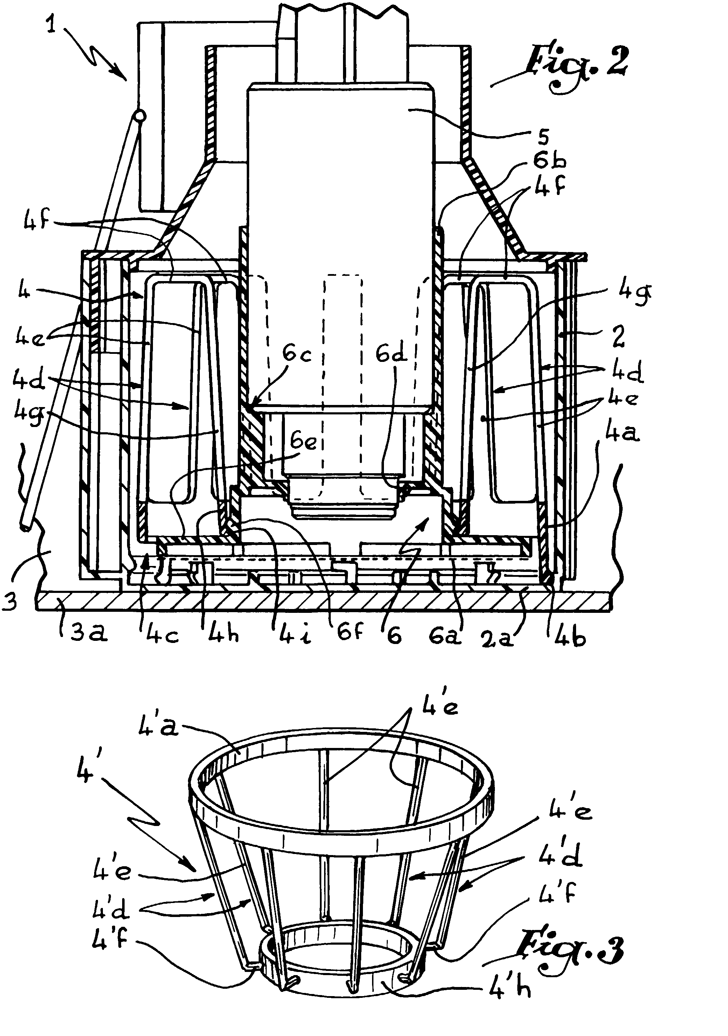

On a représenté en fig. 1 et 2 un ensemble de pompage 1 comprenant une monture ou bac de tranquillisation 2 connu en soi solidaire du fond 3a d'un réservoir 3.

A l'intérieur du bac de tranquillisation 2 est fixé à proximité de son fond 2a un dispositif de suspension 4. Ce dernier comporte une jupe 4a présentant un cordon extérieur 4b et une ouverture 4c qui permet le passage du carburant du bac de tranquillisation 2 en direction d'une pompe 5. Le dispositif de suspension 4 comporte des branches parallèles 4d s'étendant dans une direction sensiblement parallèle à l'axe de la pompe 5. Chaque branche 4d comprend un premier segment 4e s'étendant à partir de la jupe 4a, un second segment 4f sensiblement perpendiculaire au premier, et un troisième segment 4g parallèle au premier solidaire du second et venant se raccorder à une bague centrale 4h.

Les segments 4f sont d'une longueur plus faible que celle prévue pour lesdits segments 4e et 4g. Les segments 4f sont disposés perpendiculairement à l'axe de la pompe 5.

Les segments 4e et 4g sont prévus plus ou moins parallèles à l'axe de la pompe 5. Les segments 4e et 4g sont prévus de même longueur, de manière que la bague centrale 4h soit disposée d'une part au milieu et coaxiale-ment à la jupe 4a et d'autre part une faible distance du bord libre supportant le cordon extérieur 4b de la jupe 4a.

La bague centrale 4h comporte sur son bord libre interne un cordon 4i permettant l'encliquetage d'une crépine 6.

La crépine 6 présente un corps cylindrique 6b comportant dans sa partie interne un épaulement 6c destiné à supporter la pompe 5. La partie interne du corps 6b présente une réduction de diamètre dans laquelle est disposée une lèvre souple circulaire 6d permettant de réaliser l'étanchéité entre le corps de la pompe 5 et la crépine 6.

Le corps 6b est solidaire, à l'une de ses extrémités et au voisinage de la lèvre souple 6d, d'une collerette horizontale 6e de plus grand diamètre prévue pour recevoir une toile filtrante 6a.

La paroi extérieure du corps cylindrique 6b comporte à proximité de la collerette 6e un cordon périphérique 6f qui coopére avec celui 4i de la bague centrale 4h pour la fixation de la crépine 6 sur le dispositif de suspension 4, de manière que la toile filtrante 6a soit à proximité du fond 2a du bac de tranquillisation 2.

On constate que la pompe 5 est retenue à l'intérieur de la crépine 6, qui est elle-même soutenue axialement par le dispositif de suspension 4 par rapport au bac de tranquillisation 2.

On note que les segments 4e, 4g et les segments 4f reliant la jupe 4a à la bague centrale 4h permettent d'amortir l'ensemble des vibrations de la pompe 5.

En effet, les segments 4e et 4g présentent, du fait de leur grande longueur, peu de résistance aux mouvements radiaux de la pompe 5. Par contre, les segments 4f présentent une faible flexion du fait de leur petite longueur, donc une grande résistance aux mouvements axiaux de la pompe 5.

On constate que les points de jonction de chaque segment 4f avec le segment 4g correspondant sont disposés à proximité de l'axe de la pompe 5 permettant une faible résistance au rotulage, c'est-à-dire à la combinaison des mouvements radiaux et axiaux de la pompe 5. Dans ce cas, un mouvement de la pompe 5 correspond à une déformation élastique par vrille du plan passant par chaque branche 4d et par l'axe de symétrie de la pompe.

On a représenté en fig. 3 une variante du dispositif de suspension 4 référencé 4' . Le dispositif 4' comporte une jupe 4'a venant se fixer sur le bac de tranquillisation 2. Le dispositif 4' comprend des branches 4'd constituées chacune d'un premier segment 4'e sensiblement parallèle à l'axe de la pompe 5 et s'étendant à partir de la jupe 4'a et d'un second segment 4'f sensiblement perpendiculaire ou à l'axe de la pompe 5 au premier et venant se raccorder à une bague centrale 4'h. Cette dernière permet le maintien de la crépine 6, comme cela est déjà décrit ci-dessus. Le dispositif 4' comporte les mêmes caractéristiques que celui 4 afin de suspendre parfaitement la pompe 5 et/ou la crépine 6.

On note que les segments 4'e, 4'f comportent respectivement les mêmes caractéristiques que les segments 4e et 4f du dispositif de suspension 4.

Ainsi, les dispositifs de suspension 4 et 4' permettent de laisser flotter la pompe 5 tant en mouvement de rotulage qu'en mouvements radiaux, mais de la maintenir axialement de façon satisfaisante pour éviter toute transmission des vibrations la partie fixe de l'ensemble de pompage 1 et plus particulièrement au bac de tranquillisation 2 en appui sur le réservoir 3.

On remarque que la faible distance entre le bord libre soit de la jupe 4a solidaire du bac de tranquillisation 2, soit de la bague centrale 4'h et la toile filtrante 6a de la crépine 6 permet de repousser au maximum le moment d'apparition du désamorçage de la pompe 5 lorsqu'il y a peu de carburant dans le réservoir 3.

Les dispositifs de suspension 4 et 4' peuvent être réalisés en matière plastique, élastomère ou en métal. On note que les dispositifs de suspension 4 et 4' et la crépine 6 peuvent être issus d'une même et unique pièce en matière plastique.

La matière de la crépine 6 permet de souder directement la toile filtrante 6a sur la collerette 6e au moyen d'une soudure ultra-sons. on remarque que les dispositifs de suspension 4 et 4' de la pompe 5 et/ou de la crépine 6 peuvent être montés sur un ensemble de pompage 1 comportant par exemple une jauge connue en soi.

Selon un aspect avantageux de l'invention, on peut prévoir un ensemble de suspension pour une pompe ou une crépine comprenant plusieurs dispositifs de suspension tels que précédemment décrits, ces dispositifs étant intercalés entre la monture ou le bac de tranquillisation 2 et la pompe 5 ou la crépine 6. Cet ensemble est particulièrement adapté au filtrage des vibrations sur plusieurs bandes de fréquence avec des branches de géométries ou de dimensions différentes.

## Revendications

1. Dispositif pour la suspension d'une pompe et/ou d'une crépine appartenant à un ensemble de pompage de carburant pour véhicule automobile, caractérisé en ce qu'il comprend une jupe (4a, 4'a) venant se positionner sur la monture ou le bac de tranquillisation (2) de l'ensemble de pompage (1), une bague centrale (4h, 4'h) disposée au milieu et co-axialement à la jupe (4a, 4'a) de manière à supporter la pompe (5) et/ou la crépine (6) et des moyens flexibles constitués de branches (4d, 4'd) reliant la jupe (4a, 4'a) à la bague centrale (4h, 4'h), chaque branche (4d, 4'd) étant disposée dans un plan passant par l'axe de symétrie de la pompe (5) et/ou de la crépine (6) de manière que la déformation élastique de chaque branche (4d, 4'd) soit principalement contenue dans le plan passant par l'axe de symétrie de la pompe (5) et/ou de la crépine (6).

2. Dispositif suivant la revendication 1, caractérisé en ce que chaque branche (4d, 4'd) constituant les moyens flexibles comporte au moins un segment (4e, 4g ; 4'e) sensiblement parallèle à l'axe de la pompe (5) et/ou de la crépine (6) et au moins un segment (4f, 4'f) sensiblement perpendiculaire à l'axe de la pompe (5) et/ou de la crépine (6).

3. Dispositif suivant la revendication 2, caractérisé en ce que les segments (4e, 4g ; 4'e) sensiblement parallèles à l'axe de la pompe (5) et/ou de la crépine (6) soit d'une longueur plus importante que celle des segments (4f ; 4'f) sensiblement perpendiculaires audit axe.

4. Dispositif suivant la revendication 1, caractérisé en ce que les points de jonction de chaque segment (4g, 4'e) sensiblement parallèle à l'axe de la pompe (5) et/ou de la crépine (6) avec le segment correspondant (4f, 4'f) sensiblement perpendiculaire audit axe sont disposés à proximité dudit axe, ceci permettant une faible résistance au rotulage grâce à une déformation élastique par vrille dudit plan passant par ladite branche (4d, 4'd) et par ledit axe de symétrie de ladite pompe et/ou de ladite crépine.

5. Dispositif suivant la revendication 1, caractérisé en ce que chaque branche (4d) comporte un segment (4e et 4g) s'étendant respectivement à partir de la jupe (4a) et de la bague centrale (4h) et en un segment (4f) permettant de relier les segments (4e) avec ceux (4g).

6. Dispositif suivant la revendication 1, caractérisé en ce que chaque branche (4'd) comporte un segment (4'e) s'étendant à partir de la jupe (4'a) et un segment (4'f) prolongeant le segment (4'e) pour venir se raccorder à la bague centrale (4'h).

7. Dispositif suivant la revendication 5, caractérisé en ce que la jupe (4a) comporte un cordon extérieur (4b) pour la fixation du dispositif de suspension (4) sur la monture ou le bac de tranquillisation (2).

8. Dispositif suivant la revendication 5, caractérisé en ce que la bague centrale (4h) comporte un cordon interne (4i) qui coopère avec le corps cylindrique (6b) de la crépine (6) pour sa fixation sur le dispositif de suspension (4).

9. Dispositif suivant la revendication 1, caractérisé en ce que le dispositif de suspension (4 et 4') et la crépine (6) sont issus d'une même et unique pièce en matière plastique.

10. Ensemble de suspension pour une pompe ou une crépine, caractérisé en ce qu'il comprend plusieurs dispositifs de suspension (4, 4') selon l'une au moins des revendications précédentes, lesdits dispositifs étant intercalés entre la monture ou le bac de tranquillisation (2) et la pompe (5) et/ou la crépine (6).

## Claims

1. Device for suspending a pump and/or a suction sieve belonging to a fuel pumping assembly for a motor vehicle, characterized in that it comprises a skirt (4a, 4'a) positioned on the fixture or stilling tank (2) of the pumping assembly (1), a central ring (4h, 4'h) arranged at the middle of and coaxially with the skirt (4a, 4'a) so as to support the pump (5) and/or the suction sieve (6) and flexible means consisting of branches (4d, 4'd) connecting the skirt (4a, 4'a) to the central ring (4h, 4'h), each branch (4d, 4'd) being arranged in a plane passing through the axis of symmetry of the pump (5) and/or of the suction sieve (6) so that the elastic deformation of each branch (4d, 4'd) is mainly contained in the plane passing through the axis of symmetry of the pump (5) and/or of the suction sieve (6).

2. Device according to Claim 1, characterized in that each branch (4d, 4'd) constituting the flexible means comprises at least one segment (4e, 4g; 4'e) roughly parallel to the axis of the pump (5) and/or of the suction sieve (6) and at least one segment (4f, 4'f) roughly perpendicular to the axis of the pump (5) and/or of the suction sieve (6).

3. Device according to Claim 2, characterized in that the segments (4e, 4g; 4'e) roughly parallel to the axis of the pump (5) and/or of the suction sieve (6) are of a greater length than the segments (4f; 4'f) roughly perpendicular to the said axis.

4. Device according to Claim 1, characterized in that the points where each segment (4g; 4'e) roughly parallel to the axis of the pump (5) and/or of the suction sieve (6) meet the corresponding segment (4f, 4'f) roughly perpendicular to the said axis are arranged near the said axis, this providing low resistance to ball-joint-type action by virtue of an elastic deformation by twisting of the said plane passing through the said branch (4d, 4'd) and through the said axis of symmetry of the said pump and/or of the said suction sieve.

5. Device according to Claim 1, characterized in that each branch (4d) comprises a segment (4e and 4g) extending respectively from the skirt (4a) and from the central ring (4h) and in a segment (4f) allowing the segments (4e) to be connected with those (4g).

6. Device according to Claim 1, characterized in that each branch (4'd) comprises a segment (4'e) extending from the skirt (4'a) and a segment (4'f) extending the segment (4'e) to connect with the central ring (4'h).

7. Device according to Claim 5, characterized in that the skirt (4a) comprises an outer beading (4b) for fixing the suspension device (4) to the fixture or stilling tank (2).

8. Device according to Claim 5, characterized in that the central ring (4h) comprises an internal beading (4i) which collaborates with the cylindrical body (6b) of the suction sieve (6) to fix it to the suspension device (4).

9. Device according to Claim 1, characterized in that the suspension device (4 and 4') and the suction sieve (6) are made of one and the same piece of plastic.

10. Suspension assembly for a pump or a suction sieve, characterized in that it comprises a number of suspension devices (4, 4') according to at least one of the preceding claims, the said devices being inserted between the fixture or stilling tank (2) and the pump (5) and/or the suction sieve (6).

## Patentansprüche

1. Vorrichtung für die Aufhängung einer Pumpe und/oder eines zu einer Einheit zum Pumpen von Kraftstoff für Kraftfahrzeuge gehörenden Siebeinsatzes, dadurch gekennzeichnet, daß die Aufhängevorrichtung eine Schürze (4a, 4'a), welche dazu vorgesehen ist, sich auf der Montagevorrichtung oder dem Beruhigungskasten (2) der Pumpeneinheit (1) anzuordnen, einen zentralen Ring (4h, 4'h), welcher mittig und koaxial derart auf der Schürze (4a, 4'a) angeordnet ist, daß die Pumpe (5) und/oder der Siebeinsatz (6) abgestützt ist, und flexible Einrichtungen aufweist, welche Schenkel (4d, 4'd) bilden, die die Schürze (4a, 4'a) mit dem zentralen Ring (4h, 4'h) verbinden, wobei jeder Schenkel (4d, 4'd) in einer durch die Symmetrieachse der Pumpe (5) und/oder des Siebeinsatzes (6) sich erstreckenden Ebene so angeordnet ist, daß die elastische Verformung jedes Schenkels (4d, 4'd) hauptsächlich in der Ebene liegt, welche durch die Symmetrieachse der Pumpe (5) und/oder des Siebeinsatzes (6) hindurchgeht.

2. Vorrichtung nach Anspruch 1, dadurch gekennzeichnet, daß jeder die flexiblen Einrichtungen bildende Schenkel (4d. 4'd) wenigstens einen Abschnitt (4e, 4g; 4'e), welcher deutlich parallel zur Achse der Pumpe (5) und/oder des Siebeinsatzes (6) angeordnet ist, und wenigstens einen Abschnitt (4f, 4'f) umfaßt, welcher deutlich senkrecht zur Achse der Pumpe (5) und/oder des Siebeinsatzes (6) angeordnet ist.

3. Vorrichtung nach Anspruch 2, dadurch gekennzeichnet, daß die Abschnitte (4e, 4g; 4'e), welche deutlich parallel zur Achse der Pumpe (5) und/oder des Siebeinsatzes (6) verlaufen, eine Länge haben, welche bedeutender als diejenige der Abschnitte (4f: 4'f) ist, welche deutlich senkrecht zu der genannten Achse stehen.

4. Vorrichtung nach Anspruch 1, dadurch gekennzeichnet, daß die Verbindungsstellen jedes Abschnitts (4g, 4'e), welcher deutlich parallel zur Achse der Pumpe (5) und/oder des Siebeinsatzes (6) verläuft, mit dem entsprechenden Abschnitt (4f, 4't), welcher im wesentlichen senkrecht zu dieser Achse verläuft, nahe dieser Achse angeordnet sind, was Dank einer elastischen Verformung in Schraubenlinie der durch den betreffenden Schenkel (4d. 4'd) und durch die Symmetrieachse der Pumpe und/oder des Einsatzes verlaufenden Ebene einen geringen Widerstand gegenüber einer kreiselnden Bewegung (au rotulage) gestattet.

5. Vorrichtung nach Anspruch 1, dadurch gekennzeichnet, daß jeder Schenkel (4d) einen Abschnitt (4e und 4g), der sich im einzelnen von einer Schürze (4a) und von dem zentralen Ring (4h) weg erstreckt, und einen Abschnitt (4f) umfaßt. welcher ein Verbinden der Abschnitte (4e) mit jenen (4g) ermöglicht.

6. Vorrichtung nach Anspruch 1. dadurch gekennzeichnet, daß jeder Schenkel (4'd) einen Abschnitt (4'e), welcher sich von der Schürze (4'a) weg erstreckt, und einen den Abschnitt (4'e) verlängernden Abschnitt (4'f) umfaßt, um sich mit dem zentralen Ring (4'h) zu verbinden.

7. Vorrichtung nach Anspruch 5, dadurch gekennzeichnet, daß die Schürze (4a) einen äußeren Wulst (4b) zum Befestigen der Aufhängevorrichtung (4) an der Montagevorrichtung oder dem Beruhigungskasten (2) aufweist.

8. Vorrichtung nach Anspruch 5, dadurch gekennzeichnet, daß der zentrale Ring (4h) einen inneren Wulst (4i) aufweist, welcher mit dem zylindrischen Körper (6b) des Siebeinsatzes (6) zu dessen Befestigung an der Aufhängevorrichtung (4) zusammenwirkt.

9. Vorrichtung nach Anspruch 1, dadurch gekennzeichnet, daß die Aufhängevorrichtung (4 und 4') sowie der Siebeinsatz (6) von demselben und einzigen Stück aus Kunststoff herrühren.

10. Aufhängeeinheit für eine Pumpe oder einen Siebeinsatz, gekennzeichnet durch mehrere Aufhängevorrichtungen (4, 4') gemäß wenigstens einem der vorhergehenden Ansprüche, wobei die Vorrichtungen zwischen die Montagevorrichtung oder den Beruhigungskasten (2) und die Pumpe (5) und/oder den Siebeinsatz (6) geschaltet sind.
